# EUROPEAN PATENT APPLICATION

(11) **EP 1 450 508 A1**
(43) Date of publication of application: **25.08.2004**
(21) Application number: 03360030.5
(22) Date of filing: 20.02.2003
(51) Int. Cl.: H04J 14/02, G02B 6/34

(54) **Method and device for (de-)multiplexing optical signals**

(71) Applicant: ALCATEL, 75008 Paris (FR)
(72) Inventor: Cussat-Blanc, Sandrine, 91310 Montlhery (FR); Le Meur, Gaelle, 91460 Marcoussis (FR)
(74) Representative: Duhme, Torsten

(57) **Abstract**

The present invention relates to an optical device (10) and a corresponding method for (de-)multiplexing optical signals. The devices (10) comprises a multiple channel port (28), at least a first and a second separated channel port (30, 32), and a diffraction unit defining wavelength specific beam paths (46, 48) between the multiple channel port (28) and the separated channel ports (30, 32). The diffraction unit includes a diffraction grating (12) and a plurality of mirrors (16, 18) adapted for receiving and reflecting the optical beams (46, 48) from and to the diffraction grating (12.) The mirrors (16, 18) are individually angled for reflecting the optical beams (46, 48) at different angles (24) to the diffraction grating (12).

## Description

The present invention relates to an optical device for (de-) multiplexing optical signals having a plurality of wavelength separated channels, said device comprising:
- a multiple channel port,
- at least a first and a second separated channel port, and
- a diffraction unit defining wavelength specific beam paths for optical beams between the multiple channel port and the separated channel ports, said diffraction unit including a diffraction grating.

The invention further relates to a method of demultiplexing an optical signal having a plurality of wavelength separated channels, said method comprising the steps of:
- providing a diffracting grating,
- directing a beam carrying the optical signal onto the diffraction grating for generating a plurality of diffracted beams running along wavelength dependent beam paths, and
- coupling out the diffracted beams.

Such a device and a corresponding method are known, for instance, from WO 02/067475 A2.

In optical communication technology, there is an ongoing demand for increasing the information handling capacity, although optical communication technology already provides an increased capability of handling huge amounts of data compared to other forms of communication technology. One approach for increasing the amount of data which can be transmitted over an optical communication link is to increase the spectral bandwidths used. This increase, however, is limited by the bandwidth characteristics of the optical elements involved in the communication process. In today's optical communication systems, the more restrictive limitation comes from optical components required in the transmission line rather than from the optical fiber itself. For example, in a long distance optical communication system, optical amplifiers, such as erbium-doped fiber amplifiers (EDFA), are required to overcome fiber attenuation, i.e. to amplify the optical signals which have become attenuated by traveling through the fiber. With present technologies, optical amplifiers provide good characteristics for a spectral bandwidth smaller than 30 nm. An increase of the spectral bandwidths in a long distance communication system is limited by bandwidths characteristics of the optical amplifiers, although the fiber itself could deal with broader bandwidths.

In order to increase the overall bandwidth characteristic of an optical communication system, it is desired to split an incoming optical broadband signal into sub-bands. The sub-bands can then be amplified by dedicated amplifiers that are capable of appropriately handling the sub-bands. Afterwards, the amplified sub-bands can be combined again for traveling the next distance to the targeted receiver or to another intermediate amplifier. For example, it is envisaged to use C-band and L-band amplifiers in parallel combination in order to amplify an optical signal covering the C-band and the L-band as well.

With present technology, however, the separation of the broadband signal into sub-bands, such as C-band and L-band, leads to a loss of more than 3 nm in the spectral transmission range, which is equivalent to eight transmission channels in a WDM communication system having 50 GHz channel spacing. There is consequently a desire for a splitter providing seamless separation of a broadband optical signal into at least two sub-bands.

From WO 02/067475 A2 already mentioned at the outset, a WDM device for multiplexing and demultiplexing optical signals is known, which device uses two transmissive diffraction elements in order to split an incoming optical signal into sub-bands, or in order to combine incoming sub-bands into a combined optical signal. An incoming optical broadband signal is firstly collimated, and the collimated beam is directed to a first transmissive diffraction grating. The diffracted beams are directed to a second diffraction grating, and the double diffracted beams travel towards a focusing optic for coupling the diffracted beams into a plurality of separated optical fibers.

Furthermore, there are other state of the art technologies for separating an optical broadband signal having a plurality of wavelength separated channels into a plurality of sub-bands. WO 01/05082 A1, for instance, discloses a method and a device for multiplexing and demultiplexing an optical signal based on the so called Mach-Zehnder interferometer. US 6,301,046 B1 discloses an interleaver/deinterleaver for combining/separating optical channels using a birefringent crystal.

In view of the above, it is an object of the present invention to provide an alternative device and a corresponding method that allow to split a WDM signal, and more generally an optical broadband signal, into at least two sub-bands. In particular, it is an object of the invention to provide such a method and device that allow a very precise separation of adjacent spectral bands into sub-bands without loosing transmission channels lying in the separation region.

According to an aspect of the present invention, this object is achieved by an optical device as mentioned at the beginning, wherein said diffraction unit further includes a plurality of mirrors adapted for receiving and reflecting the optical beams from and to the diffraction grating, and wherein the mirrors are individually angled for reflecting the optical beams at different angles to the diffraction rating.

According to another aspect of the invention, this object is achieved by a method as mentioned at the beginning, further comprising the steps of
- providing a plurality of mirrors with a mirror in each of the wavelength dependant beam paths, and
- reflecting the diffracted beams back to the diffraction grating by means of the plurality of mirrors,
- wherein the mirrors are individually angled for reflecting the optical beams at different angles to the diffraction grating.

The invention is thus based on the idea of using a diffraction grating for providing wavelength dependant beam paths that split an incoming optical signal as a function of the respective wavelengths contained. In addition, a plurality of mirrors is used, preferably one mirror for each desired sub-band. The mirrors are individually angled with respect to the plane of the diffraction grating, thereby reflecting the incoming diffracted beams at different angles back to the diffraction grating. The mirrors are specifically placed at those locations, where wavelengths separated sub-bands arrive due to the wavelength dependant beam paths of the grating. In other words, each mirror is associated with a different spectral sub-band location. By reflecting the incoming sub-bands at different angles back to the diffraction grating, the spatial separation of the sub-bands is not only maintained, but even further enhanced. The spatially separated sub-bands are diffracted again in order to "collect" all spectral components in each sub-band desired. After that, the remaining sub-bands can be further processed, such as by a plurality of optical amplifiers adjusted to each separated sub-band.

It has turned out that the above mentioned approach allows to split a broadband optical signal into sub-bands virtually seamlessly, i.e. without "loosing" spectral bandwidths between the separated sub-bands. Therefore, the new method and device are well suited as a spectral bandwidth splitter that distributes a multichannel signal having a dense and continuous channel spacing into two or more signal paths. Furthermore, it has turned out that an insertion loss of smaller than 1 dB can be achieved with the new device and method.

In a refinement of the invention, the diffraction unit further includes a focusing lens adapted to focus the optical beams coming from the diffraction grating onto individual ones from the plurality of mirrors.

Use of such lens further improves the efficiency of the optical device and the corresponding method.

In a further refinement, the focusing lens defines a conjugated plane with respect to the diffraction grating, and said plurality of mirrors are disposed along the conjugated plane.

According to this arrangement, the focusing lens is arranged in the middle between the diffraction grating and the plane of the mirrors. In other words, the distance between the plane of the mirrors and the center of the focusing lens is the same as the distance between the center of the focusing lens and the diffraction grating, and preferably equal to the focal length. This arrangement provides an optimum optical path from the diffraction grating to the mirrors and vice versa. The efficiency of the device and method is further improved thereby.

According to another refinement, the diffraction grating comprises a longitudinal axis, and said plurality of mirrors are angled with respect to the longitudinal axis.

According to this refinement, the reflected beams are individually shifted along the elongation of the diffraction grating. This arrangement facilitates to stagger port entries of the separated channel ports in a compact arrangement.

In a further refinement, the diffraction grating is arranged rotatably around said longitudinal axis.

This refinement provides the possibility to tune the optical device by rotating the grating around the longitudinal axis. In this way, the cut-off wavelength of the device can be easily adjusted.

According to another refinement, the diffraction unit further includes a plurality of collimators, with at least one collimator being arranged between the diffraction grating and each one of the multiple channel port and the separated channel ports.

Such a use of collimators even further enhances the efficiency and preciseness of the inventive method and device. The incoming optical signal is perfectly directed to the diffraction grating, and the reflected and separated sub-bands can perfectly be coupled into output optical fibers acting as separated channel output ports.

In another refinement, the diffraction unit further includes a spherical mirror for focusing the optical beams coming from the diffraction grating onto individual ones from the plurality of mirrors. The spherical mirror is preferably used as an alternative instead of the lens mentioned above.

This refinement allows to reduce the size of the device by folding up the system on itself. The overall dimensions can thus be reduced.

Although the invention initially has been described with reference to the idea of using such a device as a signal splitter for amplifying purposes, the new method and device can also be used for other applications where a broadband optical signal is to be separated into adjacent sub-bands. For example, the new method and device can also be used in an add/drop multiplexer or in any other (de-)multiplexing application.

Furthermore, is goes without saying that the features mentioned above and those yet to be explained below can not be used only in the respective combination described but also in other combinations or on their own, without departing from the scope of the present invention.

Exemplary embodiments of the invention are illustrated in the drawings and will be explained in more detail in the following description, wherein:
- Fig. 1: shows a top view on a schematic representation of a preferred embodiment of an optical device according to the invention,
- Fig. 2: shows an elevational view showing some parts of the optical device of Fig. 1, and
- Fig. 3: shows a schematic representation of an optical communication system using the new optical device and method.

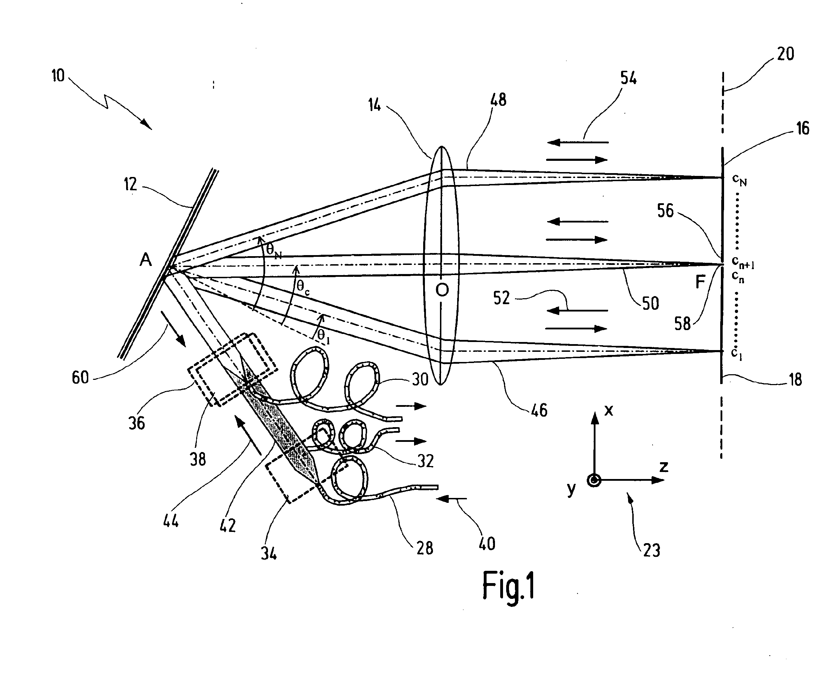

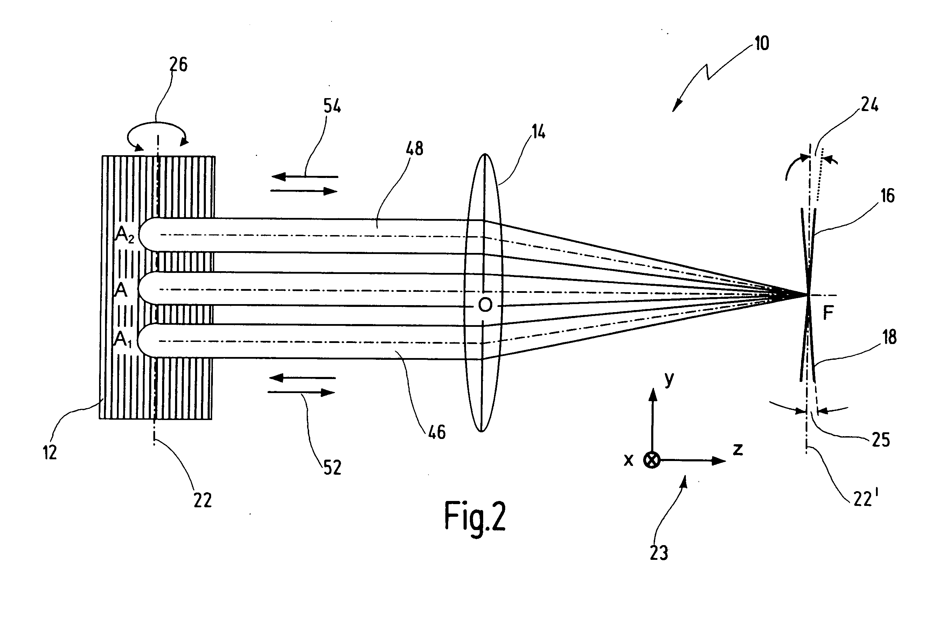

In Figs. 1 and 2, an optical device according to the invention is designated by reference numeral 10 in its entirety.

The optical device 10 comprises a diffraction grating 12, a lens 14, and two mirrors 16, 18 in this embodiment. The lens 14 focuses diffracted optical beams coming from the diffraction grating 12 onto the mirrors 16, 18. As it is known to those skilled in the art, lens 14 defines a conjugated plane 20 with respect to the diffraction grating 12, and the mirrors 16, 18 are positioned at this conjugated plane 20. Thus, the distance between center point A of diffraction grating 12 and the center point O of lens 14 is the same as the distance between center point O of lens 14 and center point F in conjugated plane 20. Furthermore, it is AO = OF = f', with f' being the focal length of lens 14.

As is illustrated in Fig. 2, diffraction grating 12 comprises an elongation and a corresponding longitudinal axis 22, which is parallel here to y-axis of coordinate system 23. The two mirrors 16, 18 are angled with respect to longitudinal axis 22, which is exemplary indicated here by angle 24 between mirror 16 and auxiliary axis 22' corresponding to longitudinal axis 22. Mirror 18 is likewise angled with respect to longitudinal axis 22, but with a different angle 25, as can be seen in Fig. 2. In this preferred embodiment, angles 24 and 25 are opposite angles.

As is further illustrated in Fig. 2, diffraction grating 12 is rotatably mounted around longitudinal axis 22, as indicated by arrow 26. Rotating diffraction grating 12 around longitudinal axis 22 allows to chose the cut-off wavelength of optical device 10.

Reference numerals 28, 30 and 32 designate optical fibers acting as input and output ports of optical device 10. In the context of the present invention, optical fiber 28 is a multiple channel port guiding a non-separated or combined optical signal, and optical fibers 30 and 32 are separated channel ports guiding separated or non-combined optical signals.

Reference numerals 34, 36, and 38 each designate a collimator for collimating the optical signals associated with optical fibers 28, 30 and 32. Collimator 34 is arranged between optical fiber 28 and diffraction grating 12, collimator 36 is arranged between diffraction grating 12 and optical fiber 30, and collimator 38 is arranged between diffraction grating 12 and optical fiber 32.

The basic operation of optical device 10 is described in the following with respect to an application as a seamless signal splitter for separating an incoming optical signal into two separated sub-bands. It will be appreciated, however, by those skilled in the art that the optical device 10 can also be used as a combiner for combining separated sub-bands into a combined optical signal.

In a preferred application of optical device 10, a WDM (wavelength division multiplex) signal having N wavelength separated channels is coupled into optical fiber 28 acting as multiple channel input port, as designated by arrow 40. The optical signal is collimated by collimator 34. The collimated signal propagates to diffraction grating 12 along beam path 42, which is indicated by arrow 44. As will be appreciated by those skilled in the art, the collimated optical signal here propagates through free space to diffraction grating 12.

At diffraction grating 12, the multichannel optical signal is diffracted such that wavelength dependant optical beam paths are generated. For example, optical channel c₁ corresponding to wavelength λ₁ is diffracted with diffraction angle θ₁, and optical channel c_{N} corresponding to wavelength λ_{N} is diffracted with diffraction angle θ_{N}. The diffracted signal parts travel along individual beam paths, two of which are designated by reference numerals 46 and 48.

The diffraction grating 12 is tuned here in such a way that a center wavelength of the whole optical signal to be separated would travel along center beam path 50, although this beam path might not be used for reasons explained further below. Lens 14, however, is placed with its optical axis falling onto beam path 50.

The diffraction grating 12 thus separates the incoming optical signal by providing individual optical beam paths 46, 48. Lens 14 focuses the optical signals from the individual beam paths 46, 48 onto mirrors 16, 18. Due to the wavelength dependent behavior of diffraction grating 12, optical channels c₁ ... c_{N} are spatially distributed along plane 20.

The separated optical signals arriving at mirrors 16, 18 are reflected back to lens 14 and further to diffraction grating 12, as indicated by arrows 52, 54.

Due to individually angled mirrors 16, 18, however, the incoming optical signals are reflected differently, as is illustrated in Fig. 2. For instance, mirror 16 reflects back the incoming optical signals with a shift parallel to the direction of the y-axis, while mirror 18 reflects back incoming optical signals with a shift in the opposite direction. Since the adjacent edges 56, 58 of mirrors 16, 18 are exactly positioned between two adjacent optical channels cₙ and cₙ₊₁, a sub-band containing optical channels c₁ to cₙ travels along beam path 46 (and further parallel beams paths, one for each channel, not shown here for sake of simplicity) back to the first (lower) half of diffraction grating 12, while optical channels cₙ₊₁ to c_{N} travel along beam path 48 (and further parallel beams paths, one for each channel, not shown here for sake of simplicity) reaching diffraction grating 12 in its second (upper) half. Therefore, an incoming multiple channel optical signal is divided by means of individually angled mirrors 16, 18.

After reaching diffraction grating 12 again, the spatially separated sub-bands are diffracted again, thereby superposing optical channels c₁ to cₙ into a first sub-band, and optical channels cₙ₊₁ to c_{N} into a second sub-band. The spatially separated sub-bands travel staggered beam paths 42 into direction of arrow 60. On this way, separated sub-bands are collimated again by collimators 36 and 38, respectively, and finally coupled into staggered optical fibers 30, 32 acting as output ports.

In summary of the above, optical device 10 thus directs the optical channels c₁ to c_{N} of an incoming WDM signal onto a plurality of mirrors 16, 18 by means of a diffraction grating 12. Since the plurality of mirrors 16, 18 are individually angled with respect to diffraction grating 12, the plurality of optical channels are reflected back along spatially separated optical beam paths 46, 48. After superposing optical channels traveling along the same reflection direction, spatially separated sub-bands of optical channels can be coupled out for further processing. As will be appreciated by those skilled in the art, optical device 10 is therefore not restricted to use of two mirrors 16, 18 only. If a multiple separation of optical channels c₁ to c_{N} is desired, a corresponding higher number of mirrors 16, 18 can be used.

In a specific embodiment that has been successfully tested, the following parameters where chosen:
- WDM spectrum of 60 nm bandwidths (1,530 nm to 1,590 nm),
- 1,200 lines/mm for the diffraction grating,
- focal length of lens 14: f' = 30 cm,
- angle of incidence on diffraction grating 12: - 70°,
- beam diameter after collimator 34: 20 mm at 1/e,
- channel spacing 100 GHz,
- 74 channels, RZ modulated at 42,7 Gbit/s,
- assumed Gaussian shape for spectral and temporal behavior.

With these parameters, the spreading of the spectrum in the plane of mirrors 16, 18 was 63 mm. Channels 37 and 38 had a spot diameter of 600 µm at -13 dB from their maximum. At this point (-13 dB from their maximum), channels 37 and 38 were separated 200 µm. A loss smaller than 0.3 db of optical power occurred, when the edges 56, 58 of mirrors 16, 18 were placed to cut channels 37 and 38 at -13 db. With these exemplary parameters, optical device 10 proved to be successful for separating the 60 nm bandwidth WDM signal into two 30 nm sub-bands. Those skilled in the art, however, will appreciate that optical device 10 can also be adapted to other parameters.

In further embodiments not shown here in the drawings for sake of simplicity, optical device 10 may comprise a spherical mirror instead of lens 14 for focusing diffracted beams 46, 48 onto plane mirrors 16, 18. Furthermore, cylindrical mirrors may be used instead of plane mirrors 16, 18, and the diffraction grating 12 might comprise an upper and a lower part that are V-like angled in the direction of the mirrors.

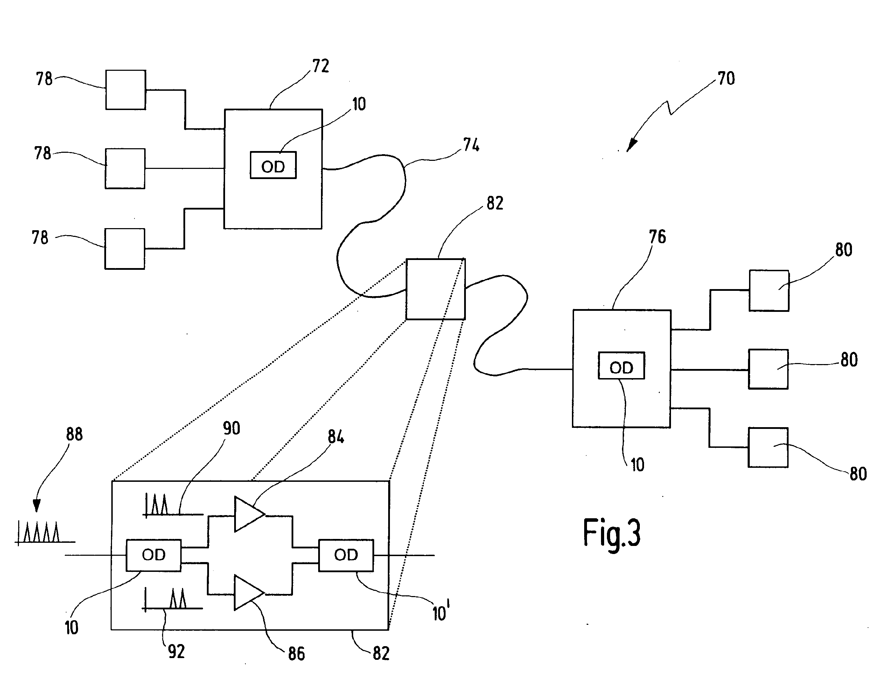

In Fig. 3, an optical communication system showing a preferred application of optical device 10 is indicated by reference numeral 70 in its entirety. As it is known by those skilled in the art, communication system 70 comprises a transmitter 72, a communication link 74, and (at least) one receiver 76. A plurality of signal sources 78 is connected to transmitter 72, and transmitter 72 multiplexes the plurality of signals coming from signal sources 78 into multiple channels of an optical broadband signal. Optical device 10 might be used as a multiplexing device, but other multiplexing devices, such as common inter-leavers, might also be used.

Receiver 76 is connected to a plurality of signal destinations 80 for receiving messages from signal sources 78. Receiver 76 might comprise an optical device 10 as a demultiplexer for demultiplexing and distributing multiplexed messages to individual signal destinations 80. Those skilled in the art, however, will appreciate that other types of demultiplexers, such as common de-interleavers, could also be used instead of optical device 10.

Communication link 74 comprises an amplifier 82 for amplifying the optical signals traveling from transmitter 72 to receiver 76. Amplifier 82 is often called a repeater, and its application is well known to those skilled in the art.

According to the preferred embodiment, amplifier 82 here comprises an optical device 10 for dividing the incoming broadband signal 88 from transmitter 72 into a lower sub-band 90 and an upper sub-band 92. Lower sub-band 90 is connected to a first amplifier stage 84 for being amplified. Amplifier stage 84 might be, for instance, an erbium-doped fiber amplifier or any other type of amplifier. Likewise, upper sub-band 92 is connected to a second amplifier stage 86. Due to separated sub-bands 90, 92, the respective bandwidth of amplifier stages 84, 86 could be narrower than the overall bandwidth of optical broadband signal 88. The output signals of amplifier stages 84, 86 are combined by a second optical device 10', in order to achieve an amplified and combined broadband signal.

As is known to those skilled in art, communication system 70 might comprise further components and branches, such as add/drop multiplexers, cross connect switches and the like. Embodiments of optical device 10 might also be used within these components for multiplexing and demultiplexing optical signals, as it will be appreciated by those skilled in the art.

## Claims

1. Optical device for (de-)multiplexing optical signals (88) having a plurality of wavelength separated channels, said device comprising:
- a multiple channel port (28),
- at least a first and a second separated channel port (30, 32), and
- a diffraction unit defining wavelength specific beam paths (46, 48) for optical beams between the multiple channel port (28) and the separated channel ports (30, 32), said diffraction unit including a diffraction grating (12),
**characterized in that** said diffraction unit further includes a plurality of mirrors (16, 18) adapted for receiving and reflecting the optical beams (46, 48) from and to the diffraction grating (12), wherein the mirrors (16, 18) are individually angled for reflecting the optical beams (46, 48) at different angles (24) to the diffraction grating (12).

2. The optical device of claim 1, wherein said diffraction unit further includes a focusing lens (14) adapted to focus the optical beams (46, 48) coming from the diffraction grating (12) onto individual ones from the plurality of mirrors (16, 18).

3. The optical device of claim 2, wherein the focusing lens (14) defines a conjugated plane (20) with respect to the diffraction grating (12), said plurality of mirrors (16, 18) being disposed along the conjugated plane (20).

4. The optical device of claim 1, wherein the diffraction grating (12) comprises a longitudinal axis (22), said plurality of mirrors (16, 18) being angled with respect to the longitudinal axis (22).

5. The optical device of claim 4, wherein the diffraction grating (12) is arranged rotatably around said longitudinal axis (22).

6. The optical device of claim 1, wherein said diffraction unit further includes a plurality of collimators (34, 36, 38), with at least one collimator (34, 36, 38) being arranged between the diffraction grating (12) and each one of the multiple channel port (28) and the separated channel ports (30, 32).

7. The optical device of claim 1, wherein said diffraction unit further includes a spherical mirror adapted to focus the optical beams (46, 48) coming from the diffraction grating (12) onto individual ones from the plurality of mirrors (16, 18).

8. An add/drop multiplexer for use in a broadband optical communication system (70), in particular a WDM or DWDM communication system, **characterized by** an optical device (10) according to any of claims 1 to 7.

9. Broadband optical communication system, in particular WDM or DWDM communication system, having an optical transmitter (72) for transmitting an optical signal, at least one optical receiver (76) for receiving the optical signal, and an optical communications link (74) connecting the transmitter (72) and the receiver (76), **characterized in that** at least one of the transmitter (72), the receiver (76) and the communications link (74) (74) comprise an optical device (10) according to any of claims 1 to 7.

10. The communication system of claim 9, further comprising at least a first and a second optical amplifier stage (84, 86) which are arranged in parallel to each other and which are adapted to amplify optical signals (88) in different wavelength bands, wherein the optical device (10) is configured to split the optical signal (88) into at least a first and a second wavelength band (90, 92), and wherein the first and the second wavelength bands (90, 92) are separately fed to one of the first and second optical amplifier stages (84, 86) for being separately amplified.

11. An optical amplifier having at least a first and a second amplifier stage (84, 86) arranged in parallel to each other, each amplifier stage (84, 86) being adapted to amplify optical signals (88) in a different wavelength band, **characterized by** an optical device (10) according to any of claims 1 to 7 for splitting an incoming broadband optical signal (88) into the different wavelength bands (90, 92), said optical device (10) feeding the first and second amplifier stages (84, 86).

12. A method of demultiplexing an optical signal (88) having a plurality of wavelength separated channels, said method comprising the steps of:
- providing a diffraction grating (12),
- directing a beam (42) carrying the optical signal (88) onto the diffraction grating (12) for generating a plurality of diffracted beams (46, 48) running along wavelength dependant beam paths, and
- coupling out the diffracted beams (46, 48),
**characterized by** the steps of
- providing a plurality of mirrors (16, 18) with a mirror in each of the wavelength dependant beam paths, and
- reflecting the diffracted beams (46, 48) back to the diffraction grating (12) by means of the plurality of mirrors (16, 18),
- wherein the mirrors (16, 18) are individually angled for reflecting the optical beams (46, 48) at different angles (24) to the diffraction grating (12).
